# EUROPEAN PATENT APPLICATION

(11) **EP 4 840 291 A1**
(43) Date of publication of application: **18.11.2026**
(21) Application number: 25175612.8
(22) Date of filing: 12.05.2025
(51) Int. Cl.: A01D 46/30, G06V 20/10

(54) **CONSTRUCTING A FRUIT HARVESTING ZONE**

(71) Applicant: CNH Industrial Italia S.p.A., 10156 Torino (IT)
(72) Inventor: Ferrari, Luca, 10156 Turin (IT); Savas, Iremsu, 10156 Turin (IT)
(74) Representative: CNH Industrial IP Department

(57) **Abstract**

The present invention relates to a computer-implemented method of constructing a fruit harvesting zone for harvesting fruit using a fruit harvesting machine. The computer-implemented method comprises: capturing an image including a plurality of fruit clusters; identifying, using a computer vision model, the plurality of fruit clusters in the image; determining a position of each fruit cluster; and constructing the fruit harvesting zone based on the determined position of the fruit clusters.

## Description

### FIELD

The subject-matter of the present disclosure relates to constructing a fruit harvesting zone in relation to crops that produce fruit whereby a fruit harvesting machine harvests the fruit produced by the crops.

### BACKGROUND

Typically, fruit harvesting machines includes fruit harvesting portions for harvesting, e.g. picking, fruit from crops such as fruit trees. The fruit harvesting portion may be limited to picking fruit within a bandwidth of a fruit harvesting zone. For example, the fruit harvesting zone may have a bandwidth of between of 0.5 metres. This means that the fruit harvesting portion may not be set to a vertical height where it would harvest the most fruit, e.g., to collect an optimum yield. For example, the fruit harvesting machine may set the height of the fruit harvesting portion to 0.5 metre vertically from the ground as this is typically the height in which the fruit is produced. One of the plants may have produced fruit at a height of 1.5 metres. In this scenario, if the fruit harvesting machine is not adjusted to a height covering the fruits produced a 1.5 metres. In this scenario the only way to harvest efficiently the fruit (i.e., harvest the most fruit possible) would be either to adjust manually the height of the fruit harvesting portion for each plant, or to pick manually the fruit from each plant.

It is an aim of the present invention to address such problems and improve on the prior art.

### SUMMARY

According to an aspect of the present disclosure, there is provided a computer-implemented method of constructing a fruit harvesting zone for harvesting fruit using a harvesting machine, the computer-implemented method comprising: capturing an image including a plurality of fruit clusters; identifying, using a computer vision model, the plurality of fruit clusters in the image; determining a position of each fruit cluster; and constructing the fruit harvesting zone based on the determined positions of the fruit clusters.

This method enables automation of manually adjusting the height of the fruit harvesting machine by finding the optimal fruit harvesting zone. In this way, the height of the machine may be automatically adjusted during the harvest of the fruit clusters to maximize the profit by knowing how the fruit zone changes across multiple plants in a row.

In an embodiment, the computer-implemented method further comprising: identifying, using a clustering model, an outlying cluster; and removing the outlying cluster prior to determining the positions of the fruit clusters.

This method ensures that the outlying clusters are not taken into consideration when constructing the fruit harvesting zone. In this way, the position of the fruit harvesting zone is optimal.

In an embodiment, the clustering model is a density based special clustering of applications with noise, DBSCAN, model.

This method does not require the number of clusters. This method considers noise arising from outliers. This method only requires two parameters.

In an embodiment, the fruit harvesting zone is a substantially horizontal band bounded by an upper elevation line and a lower elevation line.

In an embodiment, constructing the fruit harvesting zone comprises: setting an upper elevation line and a lower elevation line covering a maximum yield of fruit from fruit clusters.

This method ensures that the fruit harvesting zone is positioned such that the maximum yield is harvested. This increases the efficiency of the fruit harvesting machine.

In an embodiment, the computer vision model is a machine learning model, and optionally wherein the machine learning model is a You Only Look Once, YOLO, algorithm.

In an embodiment, identifying the plurality of fruit clusters in the image comprises constructing a bounding box around each identified fruit cluster.

In an embodiment, determining a position of each fruit cluster comprises determining a centre point of the bounding box.

In an embodiment, an area of each fruit cluster in the image is determined.

In an embodiment, determining an area of each fruit cluster in the image comprises counting a number of pixels in bounding box.

In an embodiment, determining the area of each cluster in the image comprises: applying a semantic segmentation model to the image to distinguish pixels corresponding to the fruit clusters from pixels not corresponding to any fruit cluster; and counting the number of pixels associated with each fruit cluster.

In an embodiment, constructing the fruit harvesting zone comprises: constructing a histogram using the respective position and area of each cluster; and providing a fruit harvesting mask representing a maximum band width of the fruit harvesting zone; and setting the fruit harvesting mask at a position overlaying a maximum area of the histogram.

According to an aspect, using a fruit harvesting machine comprises: constructing a fruit harvesting zone using the computer-implemented method of any preceding claim; and moving the fruit harvesting machine to harvest clusters of fruit within the fruit harvesting zone.

According to an aspect of the disclosure, there is provided a transitory, or non-transitory, computer readable medium having instructions stored thereon that when executed by at least one processor cause the at least one processor to perform the computer-implemented method of any preceding aspect or embodiment.

According to an aspect of the disclosure, there is provided a fruit harvesting machine comprising: a camera for capturing an image of a plurality of fruit clusters; a storage for storing instructions to execute the method of the first aspect; and a processor configured to use the instruction stored in the storage (18) to execute the method of the first aspect.

### BRIEF DESCRIPTION OF DRAWINGS

The subject-matter of the present disclosure is best described with reference to the accompanying figures, in which:
Figure 1 shows a side view of a fruit harvesting system where the fruit harvesting machine is towed by a fruit harvesting vehicle;
Figure 2 shows a side view of a fruit harvesting system where the fruit harvesting machine is self-propelled;
Figure 3 shows a block diagram of a computer used for implementing one or more of the computer-implemented methods described herein;
Figure 4 shows a plan view of a field including a plurality of rows of crops that the fruit harvesting machine operates in;
Figure 5 shows an image captured by the camera, wherein the fruit clusters are identified by the bounding box and an outlier is identified;
Figure 6 shows the centre point of the bounding boxes and the upper and lower elevation line which represents the fruit harvesting zone;
Figure 7 shows a histogram of the pixel count of the clusters against image height with a fruit harvesting mask overlayed such that the maximum number of pixels are within the mask;
Figure 8 shows a histogram where the outlying cluster is removed prior to overlaying the fruit harvesting mask;
Figure 9 shows a flow chart summarizing a computer-implemented method of constructing a fruit harvesting zone on an image captured by the camera; and
Figure 10 shows a flow chart summarizing the computer-implemented method of using a fruit harvesting machine to harvest fruit within the fruit harvesting zone.

### DESCRIPTION OF EMBODIMENTS

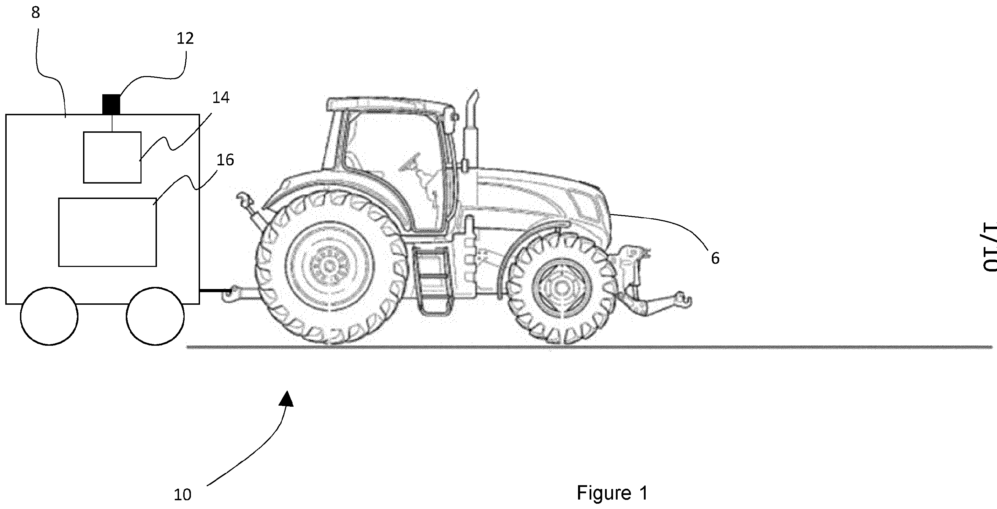

With reference to Figure 1, a fruit harvesting system 10 includes a towing vehicle 6 e.g. a tractor, and a fruit harvesting machine 8 towed by the tractor. The fruit harvesting machine 8 includes a camera 12, a computer 14 and a fruit harvesting portion 16.

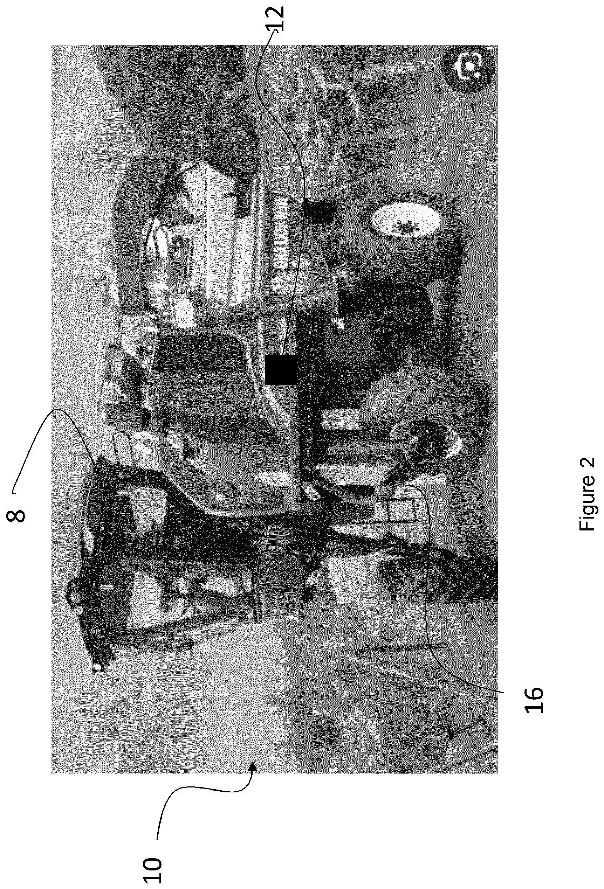

With reference to Figure 2, a fruit harvesting system 10 may include a self-propelled fruit harvesting machine 8 which does not require towing by a tractor. In this embodiment, the fruit harvesting machine 8 comprises the same camera 12, computer 14 and fruit harvesting portion 16.

The fruit harvesting machine 8 may be an agricultural vehicle such as a tractor or any other type of agricultural vehicle which facilitates harvesting fruit. The fruit harvesting machine 8 may comprise a fruit harvesting portion 16. The fruit harvesting portion 16 may include upper and lower prongs for trapping and severing a stalk of a fruit cluster. The upper and lower prongs may be separated by a vertical distance. The fruit harvesting portion 16 may also comprise strikers/shakers to remove fruit from the vine. The shakers use rails that move back and forth and shake the plant. The height of machine to shake the plant may be set automatically..

The fruit harvesting portion 16 may be towed behind the fruit harvesting machine 8. The fruit harvesting portion 16 may be automatically controlled to harvest fruit. The height of the fruit harvesting portion 16 may be adjusted to the vertical height of the fruit intended for harvesting. The fruit harvesting portion 16 may be centred to the vertical height of the fruit. The fruit harvesting portion 16 may have a bandwidth bounded by upper and lower heights from the centre point where fruit can be harvested without needing to adjust the vertical height of the fruit harvesting portion 16. The upper height may be a height of the upper prongs and the lower height may be a height of the lower prongs. This bandwidth is known as a fruit harvesting zone.

The camera 12 may be a single camera, or two or more cameras. The camera 12 may be mounted on a side of the fruit harvesting machine 8. The camera 12 may be mounted to point perpendicular to a forward direction of travel of the fruit harvesting machine 8. The camera 12 may capture an image including a plurality of fruit clusters. The camera 12 may capture an RGB image of fruit clusters as the fruit harvesting machine 8 passes by the fruit plants. The camera 12 may also capture black and white images of fruit clusters. The camera 12 may also capture any other type of image which may aid identifying fruit in an image e.g., ultraviolet or infrared.

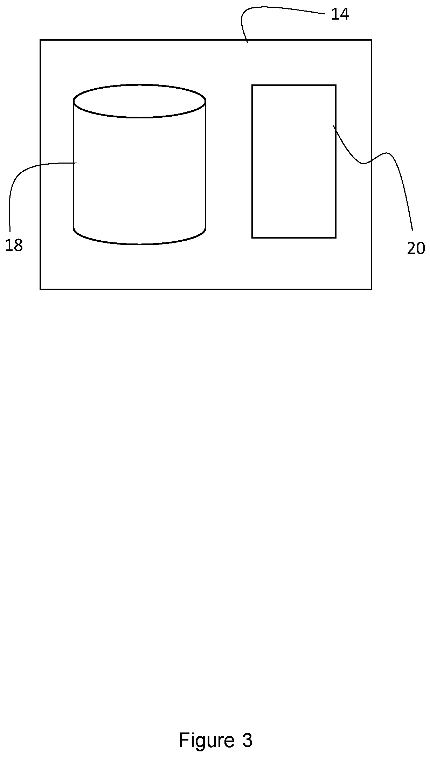

With reference to Figure 3, the computer 14 may include a processor 20 and storage 18 and may be configured to record images captured by the camera 12. The computer 14 may be further responsible for constructing a fruit harvesting zone or another computer may retrieve the images from the storage 18 to perform constructing of a fruit harvesting zone remotely on another such computer. The processor 20 is configured to execute the instructions stored in the storage 18. In this way, the storage 18 of the computer 14, or the remote computer, acts as non-transitory, computer-readable medium, having instructions stored thereon, that when executed by one or more processors, cause the one or more processors to perform the computer-implemented method described herein. When storing the instructions to the storage 18, they may be in the form of transitory computer readable media, e.g., a download signal.

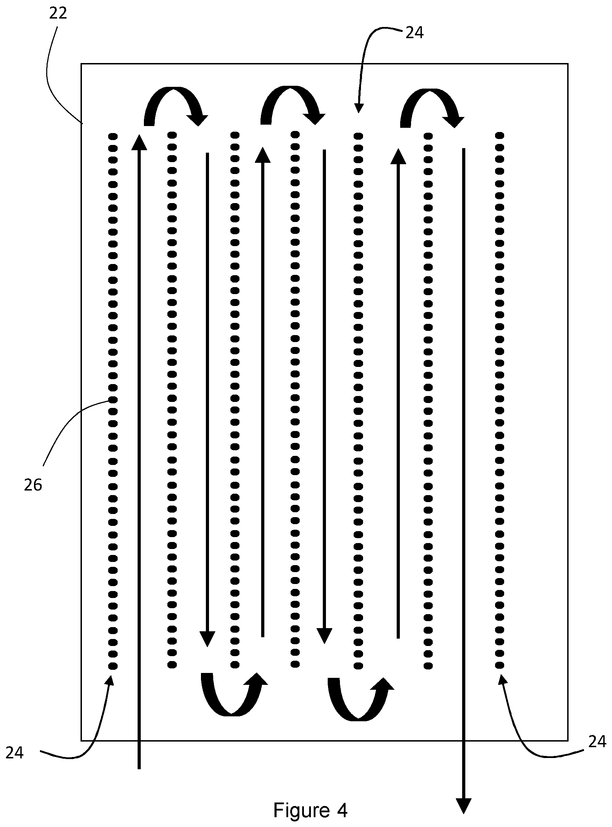

With reference to Figure 4, a field 22 includes a plurality of rows 24. Each row includes a plurality of crops 26. The crops 26 may be fruit trees. The fruit trees may yield fruit clusters. A fruit cluster may be a bunch of grapes or any other fruit that grows in clusters. A cluster does not refer to individual grapes. In order to construct a fruit harvesting zone, the fruit harvesting machine 8 traverses a route. The route involves the fruit harvesting machine 8 moving along the route between the plurality of rows 24. As the fruit harvesting machine 8 traverses the route, the camera 12 captures one or more images including a plurality of fruit clusters. The fruit harvesting machine 8 may align itself to the rows 24 and deploy the fruit harvesting portion 16 laterally to harvest the fruit clusters.

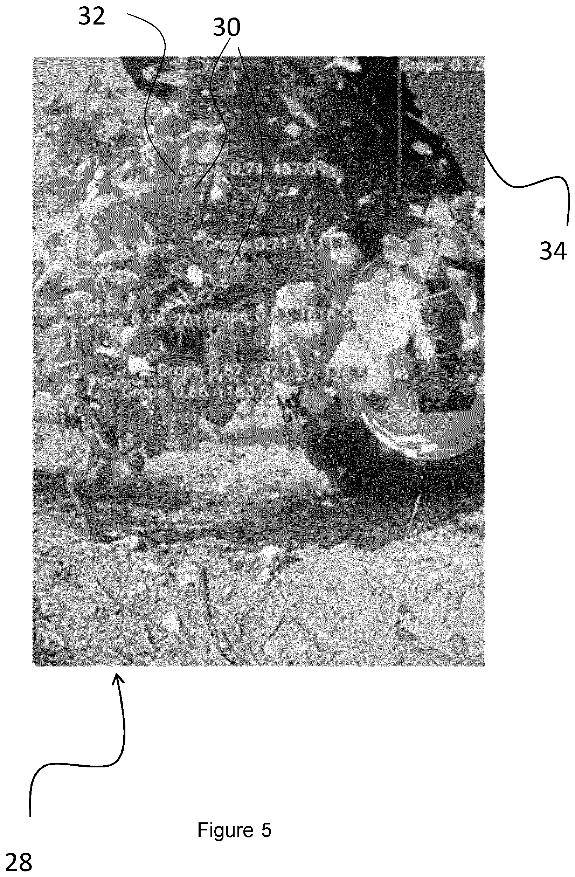

With reference to Figure 5, an example image 28 captured by the camera 12 includes a plurality of fruit clusters 30. The plurality of fruit clusters 30 in the image 28 are identified by using a computer vision model. The computer vision model is a machine learning model. The computer vision model may be stored on the storage 18 (Figure 3). The machine learning model may comprise a neural network. The machine learning model may be an object detection model. The object detection model may be a You Only Look Once, YOLO, algorithm. The YOLO algorithm may be a real-time object detection algorithm. The YOLO algorithm produces a bounding box 32 around each object of interest. The YOLO algorithm uses a deep convolutional neural network. Therefore, identifying the plurality of fruit clusters 30 in the image 28 comprises constructing a bounding box 32 around each identified fruit cluster 30. In other embodiments, the computer vision model may be a rules-based algorithm, rather than a machine learning model.

It may be desirable to identify regions of high and low densities of fruit clusters 30. The fruit clusters 30 that are identified as being in low density regions of fruit clusters 30 may be marked as an outlier. It may be desirable to ignore such outliers when setting a position of the fruit harvesting zone so that a position of the fruit harvesting portion 16 can be optimised to cover a maximum yield of fruit from fruit clusters 30 in the high-density region. Outlying clusters 34 may be identified using a clustering model. The clustering model may be a density based special clustering of applications with noise, DBSCAN, model. The DBSCAN creates a region of fruit clusters 30 where there is a high density of fruit clusters 30. An example of an outlying cluster 34 may be a cluster that is identified as being far removed from the high-density fruit cluster region of the image 28. The outlying cluster 34 may arise because there is genuinely a fruit cluster 30 that has grown in a different location to the other fruit clusters 30, e.g. on a different fruit tree. The outlying cluster 34 in Figure 5 is such an example and has come between the camera 12 and the fruit clusters 30 merely by virtue of position of the camera 12. If the outlying clusters 34 are not removed, it may affect the position of the fruit harvesting zone. The outlying clusters 34 may be removed prior to determining the positions of the fruit cluster 30.

The clustering algorithm works by determining a centre point 36 of an object of interest. In this case, the object of interest is the fruit cluster 30. Detecting the centre point 36 is described in more detail below. The parameters of the DBSCAN algorithm are tuned according to specific data and DBSCAN may be performed by fitting extracted centre points 36. The specific data may be historical images of fruit clusters being harvested. The parameters of the DBSCAN algorithm may comprise *epsilon* and *minPoints. Epsilon* may be the radius around the centre point 36 of an object and *minPoints* may be the minimum number of points within the radius epsilon. These parameters may be chosen manually depending on the specific data. DBSCAN may then group the points based on their proximities. If a point of a fruit cluster 30 does not belong to a region of fruit clusters, then it is considered an outlier and is assigned a label of -1. The centre points 36 which have the assigned label -1 are discarded, and the other centre points 36 of the fruit clusters 30 not labelled with -1 are retained.

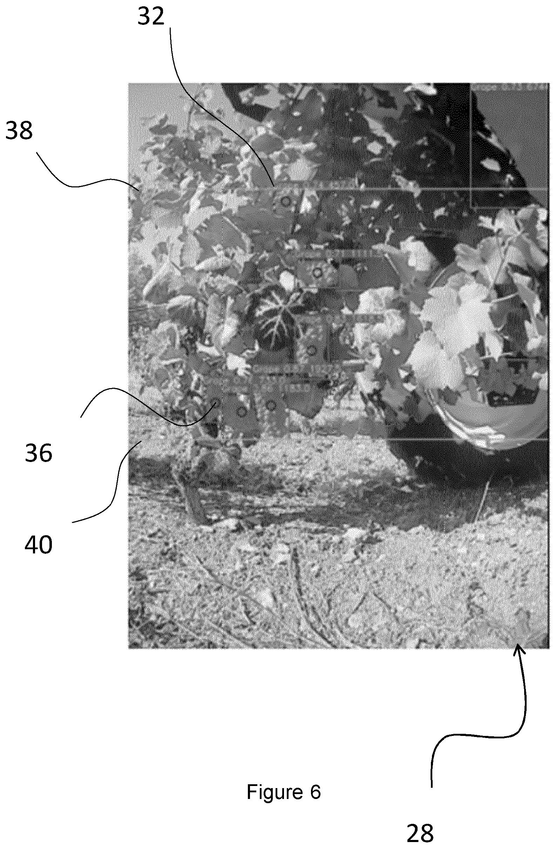

With reference to Figure 5 and 6, the position of each fruit cluster 30 is determined. Determining a position of each fruit cluster 30 may comprise determining a centre point 36 of the bounding box 32. The centre point 36 may be the centre pixel within the bounding box 32. In one embodiment, the fruit harvesting zone is constructed based on the determined positions of the fruit clusters 30. The fruit harvesting zone may be a substantially horizontal band bounded by an upper elevation line 38 and a lower elevation line 40. The upper elevation line 38 and lower elevation line 40 may be substantially parallel with each other. As described above, the fruit harvesting portion 16 corresponds to a range within which the fruit harvesting portion 16 can harvest fruit. The upper elevation line 38 may represent how far the fruit harvesting portion 16 may reach above where the fruit harvesting machine 8 has centred the fruit harvesting portion 16. The lower elevation line 40 may represent how far the fruit portion 16 may reach below where the fruit harvesting machine 8 has centred the fruit harvesting portion 16. The portion of the image 28 between the upper and lower elevation lines, 38 and 40 respectively, represents the bandwidth of the fruit harvesting portion 16. Any fruit within the bandwidth region of the fruit harvesting portion 16 may be harvested. Any fruit outside of the bandwidth region of the fruit harvesting portion 16 will not be harvested. Constructing the fruit harvesting zone may comprise setting an upper elevation line 38 and a lower elevation line 40 covering a maximum yield of fruit from fruit clusters 30. In this way, the fruit harvesting portion 16 is able to collect fruit clusters 30 from the region of fruit clusters. As described above, this region may preferably be a high-density region of fruit clusters 30, where outliers have been discarded.

An area of each fruit cluster 30 in the image 28 may be determined. Determining an area of each fruit cluster 30 in the image 28 may comprise counting a number of pixels in a bounding box 32. Determining the area of each fruit cluster in the image 28 may alternatively comprise applying a semantic segmentation model to the image 28 to distinguish pixels corresponding to the fruit clusters 30 from pixels not corresponding to any fruit cluster 30 and counting the number of pixels associated with each fruit cluster 30. Semantic segmentation algorithms categorise the pixels within an image. This may comprise identifying pixels which are classified as "fruit", and any other pixels may be classified as "non fruit". The semantic segmentation algorithm may be a neural network. The neural network used for semantic segmentation may be trained on pre-labelled datasets. The pre-labelled datasets may include images where pixels showing fruit are labelled as fruit and pixels not showing fruit are labelled as not showing fruit. The neural network may be trained using back-propagation in addition to an optimisation algorithm, e.g. gradient descent.

It will be appreciated that on some fruit trees, the fruit clusters 30 will all be concentrated into a highly dense region. However, for other fruit trees, the fruit clusters 30 will collect over a much wider and less dense region. In such cases, it may not be possible to collect every single fruit cluster 30. Therefore, it will be desirable to set a position of the fruit harvesting zone at a position which will harvest an optimal yield of fruit, leaving a minimum amount of fruit unharvested.

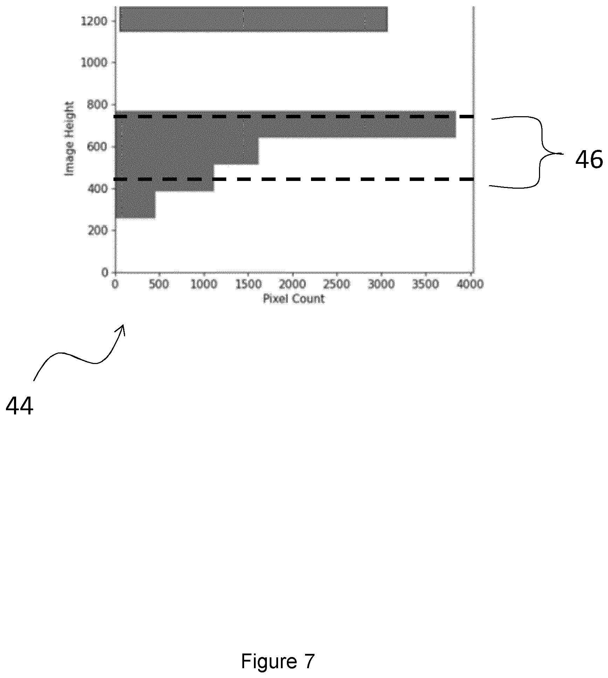

With reference to Figure 7, one embodiment of optimally positioning the fruit harvesting zone may involve constructing a histogram 44 using the respective position and area of each cluster. The histogram 44 is a diagram showing the frequency of pixels as a function of the vertical height. The histogram 44 shows the image height on the y-axis and the pixel count (frequency) on the x-axis. The pixel count on the x-axis may be the number of pixels within the bounding box 32 or the number of pixels that have been categorised as "fruit" by semantic segmentation. The image height on the y-axis represents the vertical position of the centre point 36 of the fruit cluster 30 or bounding box 32.

In addition, a fruit harvesting mask 46 may be provided representing a maximum band width of the fruit harvesting zone. In other words, a bandwidth of the fruit harvesting zone is overlayed onto the histogram 44. Finally, the fruit harvesting mask 46 may be set at a position overlaying a maximum area of the histogram 44.

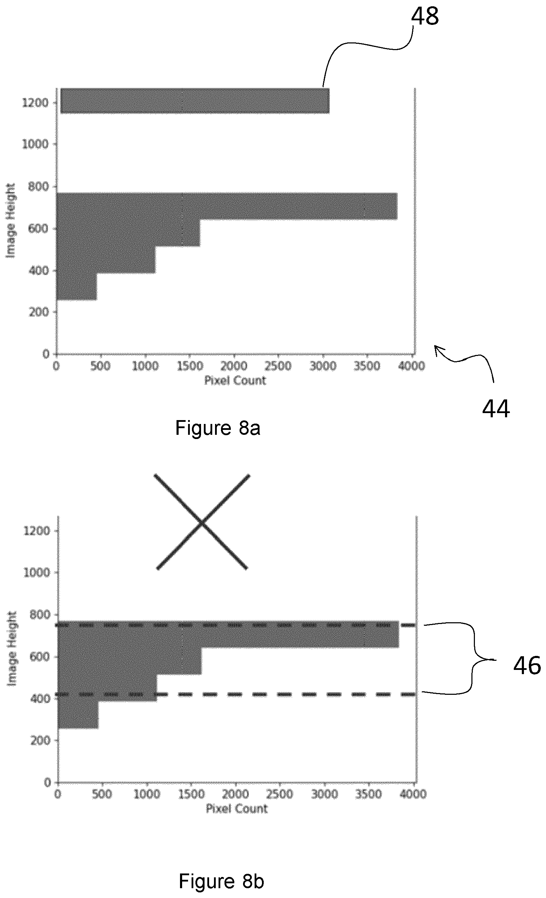

With reference to Figures 8a and 8b, in another embodiment, prior to setting the fruit harvesting mask 46 at a position overlaying a maximum area of the histogram 44, the outlying cluster 48 is removed from the histogram 44. This ensures that the position of the fruit harvesting mask 46 does not take account of the outlying cluster 48. In other words, the outlying cluster 48 is ignored when determining a position of the fruit harvesting mask 46. The fruit harvesting mask 46 relates to the fruit harvesting portion's 16 range. For example, if the fruit harvesting portion 16 can only harvest fruit 0.5 metres either side of the centre point 36 then the fruit harvesting mask 46 will represent this range on the histogram 44.

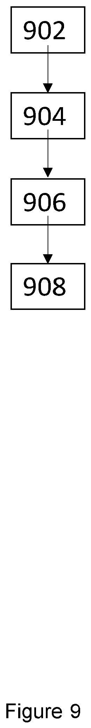

With reference to Figure 9, according to one or more embodiments, a computer-implemented method of constructing a fruit harvesting zone for harvesting fruit using a fruit harvesting machine 8 may be summarized as comprising: capturing 902 an image 28 including a plurality of fruit clusters; identifying 904 using a machine learning model, the plurality of fruit clusters 30 in the image 28; determining 906 a position of each fruit cluster 30; and construction 908 the fruit harvesting zone based on the determined positions of the fruit clusters 30.

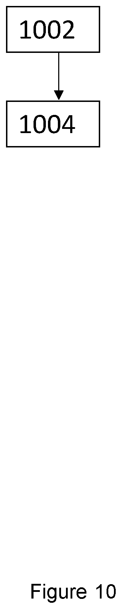

With reference to Figure 10, according to one or more embodiments, a computer-implemented method of harvesting fruit using a fruit harvesting machine 8 may be summarized as: constructing 1002 a fruit harvesting zone using the computer-implemented method summarized in Figure 9; and moving 1004 the fruit harvesting machine 8 to harvest clusters of fruit within the fruit harvesting zone.

## Claims

1. A computer-implemented method of constructing a fruit harvesting zone for harvesting fruit using a fruit harvesting machine (8), the computer-implemented method comprising:
capturing (902) an image (28) including a plurality of fruit clusters (30);
identifying (904), using a computer vision model, the plurality of fruit clusters (30) in the image (28);
determining (906) a position of each fruit cluster (30); and
constructing (908) the fruit harvesting zone based on the determined positions of the fruit clusters (30).

2. The computer-implemented method of Claim 1, further comprising:
identifying, using a clustering model, an outlying cluster (34); and
removing the outlying cluster (34) prior to determining the positions of the fruit clusters (30).

3. The computer-implemented method of Claim 2, wherein the clustering model is a density based special clustering of applications with noise, DBSCAN, model.

4. The computer-implemented method of any preceding claim, wherein the fruit harvesting zone is a substantially horizontal band bounded by an upper elevation line (38) and a lower elevation line (40).

5. The computer-implemented method of Claim 4, wherein constructing the fruit harvesting zone comprises:
setting an upper elevation line (38) and a lower elevation line (40) covering a maximum yield of fruit from fruit clusters (30).

6. The computer-implemented method of any preceding claim, wherein the computer vision model is a machine learning model, and
wherein optionally the machine learning model is a You Only Look Once, YOLO, algorithm.

7. The computer-implemented method of Claim 6, wherein the identifying the plurality of fruit clusters in the image (28) comprises constructing a bounding box (32) around each identified fruit cluster (30).

8. The computer-implemented method of Claim 7, wherein determining a position of each fruit cluster (30) comprises determining a centre point (36) of the bounding box (32).

9. The computer-implemented method of any preceding claim, further comprising determining an area of each fruit cluster (30) in the image (28).

10. The computer-implemented method of Claim 9, when dependent upon Claim 7, wherein determining an area of each fruit cluster in the image (28) comprises counting a number of pixels in bounding box (32).

11. The computer-implemented method of Claim 9, wherein determining the area of each cluster in the image (28) comprises:
applying a semantic segmentation model to the image (28) to distinguish pixels corresponding to the fruit clusters (30) from pixels not corresponding to any fruit cluster (30); and
counting the number of pixels associated with each fruit cluster (30).

12. The computer-implemented method of any of Claims 9 to 11, wherein constructing the fruit harvesting zone comprises:
constructing a histogram (44) using the respective position and area of each cluster; and
providing a fruit harvesting mask (46) representing a maximum band width of the fruit harvesting zone; and
setting the fruit harvesting mask (46) at a position overlaying a maximum area of the histogram (44).

13. A computer-implemented method of harvesting fruit using a fruit harvesting machine (8) comprising:
constructing (1002) a fruit harvesting zone using the computer-implemented method of any preceding claim; and
moving (1004) the fruit harvesting machine (8) to harvest clusters of fruit within the fruit harvesting zone.

14. A transitory, or non-transitory, computer readable medium having instructions stored thereon that when executed by at least one processor cause the at least one processor to perform the computer-implemented method of any preceding claim.

15. A fruit harvesting machine (8) comprising:
a camera (12) for capturing an image (28) of a plurality of fruit clusters (30);
a storage (18) for storing instructions to execute the method of claim 1; and
a processor (20) configured to use the instruction stored in the storage (18) to execute the method of claim 1.
